# EUROPÄISCHE PATENTANMELDUNG

(11) **EP 1 544 524 A1**
(43) Veröffentlichungstag der Anmeldung: **22.06.2005**
(21) Anmeldenummer: 03104785.5
(22) Anmeldetag: 18.12.2003
(51) Int. Cl.: F16K 31/00

(54) **Ventil mit einem Formgedächtniswerkstoff aufweisenden Ventilverschlusskörper und Verwendung eines derartigen Ventils**

(71) Anmelder: Ford Global Technologies, LLC, A subsidary of Ford Motor Company, Dearborn, MI 48126 (US)
(72) Erfinder: Figura, Michael Georg, 41542 Dormagen (DE); Kluge, Torsten, Dr., 51491 Overath (DE); Verpoort, Clemens Maria, 52074 Aachen (DE); Broda, Maik, 52249 Eschweiler (DE)
(74) Vertreter: Drömer, Hans-Carsten, Dipl.-Ing.

(57) **Zusammenfassung**

Die Erfindung betrifft ein Ventil (100), das dadurch gekennzeichnet ist, daß der mindestens eine Ventilverschlußkörper (1) mindestens einen Formgedächtniswerkstoff aufweist, so daß der Ventilverschlußkörper (1) mindestens von einer ersten Konfiguration in eine zweite Konfiguration transformierbar ist, wobei eine der beiden Konfigurationen die Schließstellung des Ventils (100) und die andere Konfiguration die Offenstellung des Ventils (100) darstellt, in der das Ventil (100) für Fluide durchlässig ist.

Verwendet wird ein derartiges Ventil (100) im Automobilbereich, insbesondere bei Brennkraftmaschinen.

## Beschreibung

Die Erfindung betrifft ein Ventil mit mindestens einem Ventilverschlußkörper, mit welchem das Ventil zwischen einer Schließstellung und einer Offenstellung schaltbar ist.

Des weiteren betrifft die Erfindung die Verwendung eines derartigen Filters.

Ventile der gattungsbildenden Art werden in den unterschiedlichsten Bereichen eingesetzt und zwar überall dort, wo der Durchfluß bzw. Zufluß von Fluiden, nämlich Gasen oder Flüssigkeiten, zu steuern ist. Die unterschiedlichen Erscheinungsformen der Ventile ergeben sich durch die unterschiedlichen Anforderungen der jeweiligen Einsatzgebiete.

Sämtlichen Ventilen ist aber gemeinsam, daß sie zumindest zwischen einer Schließstellung und einer Offenstellung schaltbar sind, wobei in einigen Anwendungsfällen zusätzlich eine gezielte Steuerung der Durchflußmenge vorgenommen wird.

Im Rahmen der vorliegenden Erfindung sind insbesondere Anwendungen im Bereich des Automobilbaus und hier insbesondere im Bereich der Brennkraftmaschine von Interesse. Dabei soll im Rahmen der vorliegenden Erfindung unter Brennkraftmaschine nicht nur der Motor an sich, sondern auch die mit dem Motor in Zusammenhang stehenden und mit diesem zusammenarbeitenden Aggregate und Maschinensysteme verstanden werden.

Im Automobilbau bzw. Motorenbau gehören die Ventile zu den häufig verwendeten Maschinenelementen, mit denen eine Vielzahl von Fluidströmungen gesteuert werden.

So ist beispielsweise im Kühlwasserkreislauf ein Ventil angeordnet, mit dem dieser Kühlwasserkreislauf in der Warmlaufphase gewissermaßen kurzgeschlossen wird, so daß das Kühlwasser im Motorblock zirkuliert, ohne daß es zur - noch nicht notwendigen und unerwünschten - Kühlung durch den Kühler geleitet wird. Das im Kühlwasserkreislauf angeordnete Ventil ist dabei in der Regel temperaturgesteuert, wobei es bei Erreichen einer gewissen Schwellentemperatur von der Schließstellung in die Offenstellung wechselt und somit für das Kühlwasser den Weg durch den Kühler freigibt. Die Temperatursteuerung kann dabei über einen im Kühlwasserkreislauf angeordneten Sensor realisiert werden, welcher die Temperatur des Kühlwassers erfaßt und bei Erreichen der Schwellentemperatur ein Signal an das Ventil bzw. die Verstellvorrichtung des Ventils sendet, mit der das Ventil von der Schließstellung in die Offenstellung umgeschaltet wird.

Dieses Beispiel zeigt schon, daß ein Ventil ein komplexes und kostenintensives Bauteil ist. Im beschriebenen Beispiel gehören zum Ventil bzw. zum Ventilsystem nicht nur das eigentliche Ventil, welches mittels eines Ventilverschlußkörpers die Ventilöffnung freigibt oder versperrt, sondern ebenfalls die erforderliche Verstellvorrichtung und ein Sensor, welcher die Steuergröße - Temperatur - erfaßt - und die Verstellvorrichtung betätigt.

Die Komplexität dieses herkömmlichen Ventils impliziert eine entsprechend hohe Störanfälligkeit des Ventils und darüber hinaus erfordert die Vielzahl der Bauteile einen entsprechend groß dimensionierten Einbauraum.

Vor diesem Hintergrund ist es die Aufgabe der vorliegenden Erfindung ein Ventil der gattungsbildenden Art bereitzustellen, mit welchem die nach dem Stand der Technik bekannten Nachteile überwunden werden und das sich insbesondere dadurch auszeichnet, daß es kostengünstiger und weniger komplex ist als herkömmliche Ventile.

Eine weitere Teilaufgabe der vorliegenden Erfindung besteht darin, Verwendungen derartiger Ventile aufzuzeigen.

Gelöst wird die erste Teilaufgabe durch ein Ventil mit mindestens einem Ventilverschlußkörper, mit welchem das Ventil zwischen einer Schließstellung und einer Offenstellung schaltbar ist, und das dadurch gekennzeichnet ist, daß der mindestens eine Ventilverschlußkörper mindestens einen Formgedächtniswerkstoff aufweist, so daß der Ventilverschlußkörper mindestens von einer ersten Konfiguration in eine zweite Konfiguration transformierbar ist, wobei eine der beiden Konfigurationen die Schließstellung des Ventils und die andere Konfiguration die Offenstellung des Ventils darstellt, in der das Ventil für Fluide durchlässig ist.

Formgedächtniswerkstoffe an sich - sogenannte shape memory materials oder shape memory alloys - sind seit mehr als fünfzig Jahren bekannt. Sie besitzen die Fähigkeit ihre äußere Gestalt in Abhängigkeit von der Temperatur, von der magnetischen Feldstärke oder von dem hydraulischen Druck, dem sie ausgesetzt sind, oder dergleichen zu ändern. Unter die Formgedächtniswerkstoffe werden im Rahmen der vorliegenden Erfindung sämtliche Werkstoffe subsumiert, die über ein Formgedächtnis verfügen, insbesondere die Formgedächtnislegierungen, aber auch Keramiken mit Formgedächtnis, wie beispielsweise Ce-TZP-Keramik.

Beispielsweise kann eine aus einem länglichen Draht geformte Büroklammer ihre Gestalt in der Art ändern, daß die Büroklammer - in einen Topf mit heißem Wasser gelegt - mit steigender Temperatur und bei Erreichen einer sogenannten Übergangstemperatur T' in ihre ursprüngliche Form übergeht d. h. die Gestalt eines länglichen Drahtes annimmt. Sie ändert dabei ihre äußere Gestalt oder - mit anderen Worten gesagt - ihre strukturelle Konfiguration. Dieser Transformationsprozeß kann sich sehr schnell vollziehen, so daß die Büroklammer gewissermaßen in die andere Konfiguration springt.

Ist dieser Transformationsprozeß umkehrbar, so handelt es sich bei dem Formgedächtniswerkstoff um einen sogenannten Zwei-Weg-Formgedächtniswerkstoff, andernfalls um einen Ein-Weg-Formgedächtniswerkstoff.

Folglich könnte der oben beschriebene Übergang der Büroklammer zu einem länglichen Draht bei geeigneter Auswahl eines Zwei-Weg-Formgedächtniswerkstoffes rückgängig gemacht werden. Hierzu wird die Temperatur abgesenkt, wobei der Draht sich bei Unterschreiten einer Übergangstemperatur T" zu einer Büroklammer umformt. Die Übergangstemperaturen T' und T" können übereinstimmen. In der Regel ist die Transformationskurve des Formgedächtniswerkstoffes in Abhängigkeit von der Temperatur aber eine Hysterese, weshalb die Übergangstemperaturen T' und T" auseinanderfallen.

Die Ausbildung eines Ventils unter Zuhilfenahme mindestens eines Formgedächtniswerkstoffes, wie es Gegenstand der vorliegenden Erfindung ist, erfordert einen Zwei -Weg-Formgedächtniswerkstoff, so daß der mindestens eine Ventilverschlußkörper sowohl beim Überschreiten eines Transformationspunktes als auch beim Unterschreiten eines - gegebenenfalls anderen - Transformationspunktes seine Konfiguration ändert. Erforderlich ist eine derartige Ausführung des mindestens einen Ventilverschlußkörpers, da das Ventil zur Erfüllung seiner Grundfunktion in beide Richtungen schaltbar sein muß, d. h. sowohl von der Schließstellung in die Offenstellung als auch von der Offenstellung in die Schließstellung.

Im weiteren wird, um die Beschreibung der vorliegenden Erfindung zu vereinfachen, davon ausgegangen, daß die Übergangstemperaturen T' und T" übereinstimmen, wobei Fälle, in denen dies nicht so ist, von der vorliegenden Erfindung mitumfaßt werden.

Die im oben näher beschriebenen Beispiel erwähnte Büroklammer besitzt gewissermaßen ein Gedächtnis an ihre ursprüngliche Gestalt, nämlich an ihre Form als länglicher Draht, aus dem sie geformt wurde. Ein mögliches, der Transformation zugrundeliegendes Prinzip kann die Gefügeumwandlung der Legierung sein, insbesondere die Transformation von Austenit in Martensit und umgekehrt.

Diese Gefügeumwandlung wissenschaftlich d.h. mathematisch zu beschreiben, versuchen beispielsweise Arndt, Griebel und Roubí 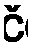 ek in ihrem Artikel *"Modelling and numerical simulation of martensitic transformation in shape memory alloys",* der am 27. Juni 2003 im Internet veröffentlicht wurde.

Außer der Gefügeumwandlung kann die Transformation von Formgedächtnislegierungen aber auch auf anderen Mechanismen beruhen, auf die an dieser Stelle nicht weiter eingegangen werden soll, da diese Mechanismen an sich nicht unmittelbarer Gegenstand der vorliegenden Erfindung sind.

Mit der Verwendung von Formgedächtniswerkstoffen bei der Herstellung von Ventilen ist es möglich, völlig neuartige Ventile und Ventilsysteme zu konzipieren. Das erfindungsgemäße Ventil benötigt keinen separaten Sensor zur Erfassung der Steuergröße und keine gesonderte Verstellvorrichtung, welche das Ventil zwischen einer Schließstellung und einer Offenstellung hin und her schaltet. Ein Sensor und eine Verstellvorrichtung sind dem erfindungsgemäßen Ventil gewissermaßen immanent. Bei einem temperaturgesteuerten Ventil registriert der Formgedächtniswerkstoff als solcher selbst die Temperatur und erwärmt sich bzw. kühlt sich ab. Der Formgedächtniswerkstoff geht von sich aus bei Erreichen einer Transformationstemperatur von einer ersten Konfiguration in eine zweite Konfiguration über, wobei eine der beiden Konfigurationen die Schließstellung des Ventils und die andere Konfiguration die Offenstellung des Ventils darstellt, in der das Ventil für Fluide durchlässig ist.

Weitere Vorteile des erfindungsgemäßen Ventils werden im Zusammenhang mit der Beschreibung der bevorzugten Ausführungsformen des Ventils, wie sie sich aus den Unteransprüchen ergeben, erläutert.

Der mindestens eine Ventilverschlußkörper des erfindungsgemäßen Ventils soll mindestens einen Formgedächtniswerkstoff aufweisen d.h. er muß nicht vollständig aus dem mindestens einen Formgedächtniswerkstoff bestehen.

Vorteilhaft sind nämlich auch Ausführungsformen des Ventils, bei denen der mindestens eine Ventilverschlußkörper eine Matrix aufweist, in welche der Formgedächtniswerkstoff, vorzugsweise in Form von Fasern, eingebettet ist. So kann der mindestens eine Formgedächtniswerkstoff gegen Korrosion oder andere äußere Einflüsse geschützt werden.

Vorteilhaft sind dabei insbesondere Ausführungsformen des Ventils, bei denen die Matrix vorwiegend aus Aluminium oder Plastik gefertigt ist. Diese Materialien verfügen über die notwendige Elastizität, welche es dem eingebetteten Formgedächtniswerkstoff ermöglicht, die Matrix mit nur geringem Kraftaufwand zu deformieren.

Vorteilhaft sind auch Ausführungsformen des Ventils, bei denen der mindestens eine Ventilverschlußkörper ein Trägersubstrat aufweist, auf das der Formgedächtniswerkstoff aufgetragen, vorzugsweise aufgesputtert, ist.

Die zuletzt erläuterten Ausführungsformen arbeiten gewissermaßen mit Verbundwerkstoffen für die Herstellung des mindestens einen Ventilverschlußkörpers. Diese Verbundwerkstoffe zeichnen sich dadurch aus, daß sie mindestens einen Formgedächtniswerkstoff aufweisen. Vorteile bieten diese Ausführungsformen, weil mit Verbundwerkstoffen die Möglichkeit geschaffen wird, die vorteilhaften Eigenschaften mehrerer Werkstoffe zu kombinieren.

Des weiteren führen diese Ausführungen des Ventilverschlußkörpers zu Materialund Kosteneinsparungen hinsichtlich der Formgedächtniswerkstoffe.

Vorteilhaft sind Ausführungsformen des Ventils, bei denen der mindestens eine Formgedächtniswerkstoff ein Formgedächtniswerkstoff aus der folgenden Gruppe ist: NiTi (Nitinol), Fe-Pt, Cu-Al-Ni, Fe-Pd, Fe-Ni, Cu-Zn-Al, CuAlmn, Keramik, insbesondere Ce-TZP-Keramik. Vorteilhaft ist der Einsatz dieser Formgedächtniswerkstoffe deshalb, weil diese Formgedächtniswerkstoffe zu den derzeit meist verwendeten Werkstoffen gehören, so daß bereits umfangreiche Erfahrungen mit diesen Werkstoffen vorliegen, die die Applikation der Formgedächtniswerkstoffe auf das Ventil wesentlich vereinfachen. Insbesondere verfügen diese Formgedächtniswerkstoffe über die notwendigen Eigenschaften, beispielsweise über eine nur gering ausgebildete Remanenz im Hinblick auf die inneren Spannungen d.h. gute Eigenschaften im Hinblick auf den Abbau der inneren Spannungen, welche sich aufgrund der Änderung der äußeren Gestalt d. h. der wiederholten Transformation ergeben. Hervorzuheben ist aber besonders die Fähigkeit dieser Formgedächtniswerkstoffe, ihre äußere Gestalt ohne Abnutzungserscheinungen und/oder ohne Zerstörungen häufig ändern zu können.

Vorteilhaft sind Ausführungsformen des Ventils, bei denen der mindestens eine Formgedächtniswerkstoff mittels Temperatur steuerbar ist und mindestens eine Übergangstemperatur T₁ als Transformationspunkt aufweist, bei der der mindestens eine Ventilverschlußkörper von der ersten Konfiguration in die zweite Konfiguration übergeht. Dabei kann die Temperatursteuerung auch mittels elektrischer Heizung realisiert werden. Diese Art der Temperatursteuerung bietet sich auch im Automobilbau an, da mit der Batterie bereits eine Quelle elektrischer Energie bereitsteht.

Vorteilhaft sind auch Ausführungsformen des Ventils, bei denen der mindestens eine Formgedächtniswerkstoff mittels Magnetfeld steuerbar ist und mindestens eine Übergangs-Magnetfeldstärke H₁ als Transformationspunkt aufweist, bei der der mindestens eine Ventilverschlußkörper von der ersten Konfiguration in die zweite Konfiguration übergeht. Vorteile bietet diese Art der Steuerung insbesondere dadurch, daß die Transformation des mindestens einen Ventilverschlußkörpers berührungslos eingeleitet werden kann. Es ist somit nicht erforderlich, daß der mindestens eine Ventilverschlußkörper über einen Zugang verfügt. Diese Ausführungsform des erfindungsgemäßen Ventils bietet sich insbesondere für nur schwer zugängliche Ventile an, wie sie bei Brennkraftmaschinen vorhanden sind.

Vorteilhaft sind auch Ausführungsformen des Ventils, bei denen der mindestens eine Formgedächtniswerkstoff mittels hydrostatischem Druck steuerbar ist und mindestens einen Übergangsdruck P₁ als Transformationspunkt aufweist, bei der der mindestens eine Ventilverschlußkörper von der ersten Konfiguration in die zweite Konfiguration übergeht.

Vorteilhaft sind insbesondere Ausführungsformen des Ventils, bei denen der mindestens eine Formgedächtniswerkstoff n Transformationspunkte - d.h. n Übergangstemperaturen T₁ bis Tₙ, n Übergangs-Magnetfeldstärken H₁ bis Hₙ oder n Übergangsdrücke P₁ bis Pₙ - aufweist, bei denen der mindestens eine Ventilverschlußkörper von einer Konfiguration in eine andere Konfiguration übergeht, wobei der mindestens eine Ventilverschlußkörper (n+1) Konfigurationen aufweist.

Mehrere Transformationspunkte erhöhen die Vielfalt bei der Steuerung des Ventils, insbesondere bei der Variation der Durchlässigkeit des mindestens einen Ventilverschlußkörper, welcher dann stufenweise und bei einer genügend hohen Anzahl an Transformationspunkten nahezu stufenlos verstellbar wird, wodurch der Durchfluß nahezu stufenlos gesteuert werden kann.

Vorteilhaft sind Ausführungsformen des Ventils, bei denen der mindestens eine Ventilverschlußkörper in der einen Konfiguration - der Schließstellung des Ventils - eine ballige Form, vorzugsweise eine Kugelform, aufweist, wohingegen in der anderen Konfiguration - der Offenstellung des Ventils - der Ventilverschlußkörper beispielsweise karamboleförmig ausgebildet ist. Günstig an dieser Ausführungsform ist, daß, unter Berücksichtigung der Tatsache, daß eine Vielzahl von herkömmlichen Ventilen nach dem Stand der Technik mit einem Ventilverschlußkörper arbeiten, der eine ballige Form, insbesondere eine Kugelform, aufweist, diese bereits im Einsatz befindlichen Ventile mit einem erfindungsgemäßen Ventilverschlußkörper ausgestattet bzw. nachgerüstet werden können, um auf diese Weise eine erfindungsgemäßes Ventil zu erhalten.

Vorteilhaft sind Ausführungsformen des Ventils, bei denen der mindestens eine Ventilverschlußkörper mit Poren ausgestattet ist, wobei in der einen Konfiguration - der Schließstellung des Ventils - die Poren geschlossen sind und in der anderen Konfiguration - der Offenstellung des Ventils - die Poren geöffnet sind. Vorteilhaft an dieser Ausführungsform ist, daß das Ventil gleichzeitig als Filter genutzt werden kann, wobei die Durchlässigkeit des Ventils über die Porengröße gesteuert wird.

Filter werden - wie Ventile - in den unterschiedlichsten Bereichen eingesetzt und zwar überall dort, wo Fluide, nämlich Gase oder Flüssigkeiten, von unerwünschten Bestandteilen befreit werden sollen, wozu sie gefiltert werden. Der Filter ist im Automobilbau grundsätzlich ein Verbrauchsmaterial und als Ersatzteil ausgeführt, das nach Ablauf seiner Lebensdauer, wenn eine ausreichende Filtertätigkeit nicht mehr gewährleistet ist, ausgetauscht wird. Die Porosität eines bestimmten Filtereinsatzes d. h. die Größe seiner Poren und damit seine Durchlässigkeit sind grundsätzlich unveränderlich, weshalb die Porosität ein definierter, charakteristischer Kennwert jeden Filters ist. Mit zunehmender Gebrauchsdauer nimmt aber die Porosität in der Regel durch sich auf dem Filtereinsatz ablagernde Partikel ab. Die Partikel, welche den sogenannten Filterkuchen bilden, verengen die Strömungsquerschnitte der einzelnen Poren.

Deshalb sind bei Ventilen, die gleichzeitig als Filter dienen, Ausführungsformen vorteilhaft, bei denen die Größe der Poren steuerbar ist, was beispielsweise möglich ist, wenn der Formgedächtniswerkstoff mehrere Transformationspunkte aufweist.

Da mit zunehmender Gebrauchsdauer - wie bereits dargelegt - die Porosität in der Regel abnimmt, kann den sich hierdurch verengenden Strömungsquerschnitten der einzelnen Poren dadurch entgegengewirkt werden, daß der Ventilverschlußkörper von der einen in die andere Konfiguration, nämlich die Konfiguration mit den größeren Poren, transformiert wird. Die Abnahme der Porosität wird hierdurch kompensiert, zumindest aber wird ihr entgegengewirkt.

Eine veränderbare Porosität kann auch dazu genutzt werden, einen stark verunreinigten Filter bzw. Ventil zu säubern. So kann die Konfiguration des Ventilverschlußkörpers für einen definierten Zeitraum in der Art verändert werden, daß die Poren vergrößert sind. Durch diese vergrößerten Poren können dann die auf dem Ventilverschlußkörper befindlichen Partikel, die vorher noch von den kleineren Poren herausgefiltert wurden, abgeführt werden.

Vorteilhaft sind Ausführungsformen des Ventils, bei denen der Ventilverschlußkörper als Gewebe ausgeführt ist, welches aus sich kreuzenden Gewebefasern aufgebaut ist, wobei die Porengröße und damit die Durchlässigkeit des Ventilverschlußkörpers durch die äußere Gestalt der Gewebefasern, insbesondere durch die Geradlinigkeit der Gewebefasern steuerbar ist.

Die mindestens zwei Konfigurationen des Gewebes bzw. des mindestens einen Ventilverschlußkörpers unterscheiden sich dadurch, daß in der einen Konfiguration die Gewebefasern eine eher längliche Gestalt aufweisen und dadurch zwischen den Gewebefasern Poren ausgebildet werden, die einen genügend großen Strömungsquerschnitt für das Fluid freigeben. In einer anderen Konfiguration des mindestens einen Ventilverschlußkörpers weisen die Gewebefasern nicht mehr ihre längliche Gestalt auf, sondern sind mehr oder weniger verdreht. In einem Grenzfall sind die Fasern derart versponnen, daß sie einen geschlossenen, undurchlässigen Filz bilden, wodurch die Schließstellung des Ventils realisiert wird.

Vorteilhaft sind Ausführungsformen des Ventils, bei denen der mindestens eine Ventilverschlußkörper netzartig ausgebildet ist und über im geöffneten Zustand maschenförmig ausgebildete Poren verfügt. Im Gegensatz zu dem zuvor erläuterten Gewebe ermöglicht diese Ausführungsform die Ausbildung einer symmetrischen Struktur des mindestens einen Ventilverschlußkörpers und des weiteren die Generierung von Maschen bzw. Poren einer vorgebbaren bestimmten Größe. Dabei können die Poren bei der Herstellung des mindestens einen Ventilverschlußkörpers gezielt, beispielsweise in ein ebenes, aus einem Formgedächtniswerkstoff geformten Plättchen, eingebracht werden.

Vorteilhaft sind dabei Ausführungsformen des Ventils, bei denen die Poren im geöffneten Zustand rhombusförmig oder parallelogrammförmig ausgebildet sind. Vorteilhaft ist an dieser Ausführungsform, daß der Ventilverschlußkörper in seiner geschlossenen Konfiguration d.h. bei vollständig geschlossenen Poren über eine überaus zufriedenstellende Dichtigkeit verfügt. Begründet ist dies dadurch, daß derartig geformte Poren d h. rhombusförmig oder parallelogrammförmig ausgebildete Poren sich in leichter Weise verschließen lassen und die die Poren im geöffneten Zustand begrenzenden Seitenränder im geschlossenen Zustand bündig und dicht aneinander liegen.

Vorteilhaft sind aber auch Ausführungsformen des Ventils, bei denen die Poren im geöffneten Zustand sternförmig ausgebildet sind.

Vorteilhaft sind bei im geöffneten Zustand sternförmig ausgebildeten Poren Ausführungsformen des Ventils, bei denen die die Poren seitlich begrenzenden Abschnitte im geöffneten Zustand vom Ventilverschlußkörper hervorstehen. Im geöffneten Zustand - zweite Konfiguration - hat der Ventilverschlußkörper dann eine Topographie, die der einer Käsereibe ähnelt. Dabei stehen die Abschnitte, die die Poren seitlich begrenzen, in Form von blattförmigen Zungen hervor.

Vorteilhaft an dieser Ausführungsform ist, daß der mindestens eine Ventilverschlußkörper, in seiner geschlossenen Konfiguration d. h. bei vollständig geschlossenen Poren über eine hervorragende Dichtheit verfügt. Begründet ist dies dadurch, daß die unsymmetrisch geformten Zungen sich im geschlossenen Zustand der Poren nahtlos zu einem in sich kompakten, geschlossenen Blatt zusammenfügen, wobei die einzelnen Zungen sich gegeneinander abstützen und ineinander greifen, was zu einer hohen Stabilität und Dichtheit im geschlossenen Zustand führt.

Die zweite der Erfindung zugrundeliegende Teilaufgabe wird gelöst durch die folgenden Verwendungen des erfindungsgemäßen Ventils.

Vorteilhaft sind dabei Verwendungen des Ventils, bei denen das Ventil im Kraftstoffsystem einer Brennkraftmaschine verwendet wird. Das Ventil könnte dann in der Schließstellung als Wegfahrsperre dienen und gleichzeitig in der Offenstellung bei entsprechender Ausgestaltung den Kraftstoff filtern.

Vorteilhaft sind auch Verwendungen des Ventils, bei denen das Ventil im Ölkreislauf einer Brennkraftmaschine verwendet wird.

Vorteilhaft sind auch Verwendungen des Ventils, bei denen das Ventil im Kühlwasserkreislauf einer Brennkraftmaschine verwendet wird. Wie bereits in der Einleitung ausgeführt, kann mit einem im Kühlwasserkreislauf angeordneten Ventil der Kühlwasserkreislauf in der Warmlaufphase gewissermaßen kurzgeschlossen werden, so daß das Kühlwasser im Motorblock zirkuliert, ohne daß es zur Kühlung durch den Kühler geleitet wird. Günstig ist hierbei der Einsatz eines temperaturgesteuerten Formgedächtniswerkstoffes, welcher durch die Kühlwassertemperatur infolge Beaufschlagung mit Kühlwasser gesteuert wird.

Vorteilhaft sind Verwendungen des Ventils, bei denen das Ventil in der Luftzufuhr einer Brennkraftmaschine verwendet wird.

Vorteilhaft sind dabei Verwendungen des Ventils, bei denen das Ventil in der Bypaßleitung eines Ladeluftkühlers verwendet wird. Bei Brennkraftmaschinen mit einem in einer Ladeluftzuleitung der Brennkraftmaschine angeordneten Aufladeaggregat zur Verdichtung der Ladeluft und einem stromab angeordneten Ladelüftkühler zur anschließenden Ladeluftkühlung, wird zunehmend eine den Ladeluftkühler umgehende Bypaßleitung vorgesehen, die mit einer Umschaltvorrichtung ausgestattet wird, so daß der Ladeluftstrom stufenlos einstellbar in vorbestimmbar großen Ladeluftteilströmen durch den Ladeluftkühler und / oder die Bypaßleitung führbar ist. Zweck der Bypaßleitung ist es, in der Warmlaufphase d. h. bei noch kaltem Motor die Luft ungekühlt der Verbrennung zuzuführen, um einerseits das Warmlaufen des Motors zu beschleunigen und andererseits unerwünschte Emissionen, insbesondere von unverbrannten Kohlenwasserstoffen, zu vermeiden.

Vorteilhaft sind auch Verwendungen des Ventils, bei denen das Ventil in der Klimaanlage eines Fahrzeuges verwendet wird.

Im folgenden wird die Erfindung anhand von sieben Ausführungsbeispielen gemäß den Figuren 1 bis 15b näher beschrieben. Hierbei zeigt:
- Fig. 1: schematisch eine erste Ausführungsform eines Ventilverschlußkörpers i n der Draufsicht,
- Fig. 2a: die in Figur 1 kenntlich gemachte Einzelheit X in einer Vergrößerung in der Draufsicht in der Offenstellung,
- Fig. 2b: die in Figur 1 kenntlich gemachte Einzelheit X in einer Vergrößerung in der Draufsicht in der Schließstellung,

- Fig. 3: die in Figur 2a dargestellte Einzelheit X in der Seitenansicht,
- Fig. 4: schematisch eine zweite Ausführungsform eines Ventilverschlußkörpers in der Draufsicht in der Offenstellung,
- Fig. 5: die in Figur 4 dargestellte Ausführungsform in der Draufsicht in der Schließstellung,
- Fig. 6: schematisch eine dritte Ausführungsform eines Ventilverschlußkörpers in der Draufsicht in der Offenstellung,
- Fig. 7: die in Figur 6 dargestellte Ausführungsform in der Draufsicht in der Schließstellung,
- Fig. 8: schematisch eine vierte Ausführungsform eines Ventilverschlußkörpers in der Draufsicht mit weit geöffneten Poren,
- Fig. 9: die in Figur 8 dargestellte Ausführungsform in der Draufsicht mit weniger weit geöffneten Poren,
- Fig. 10: schematisch eine fünfte Ausführungsform eines Ventilverschlußkörpers in der Draufsicht in der Offenstellung, und
- Fig. 11: die in Figur 10 dargestellte Ausführungsform in der Draufsicht in der Schließstellung.
- Fig. 12: schematisch eine sechste Ausführungsform eines Ventils im Querschnitt in der Offenstellung,
- Fig. 13: die in Figur 12 dargestellte Ausführungsform in der Schließstellung,
- Fig. 14a: schematisch eine siebte Ausführungsform eines Ventils im Querschnitt in der Schließstellung,
- Fig. 14b: die in Figur 14a dargestellte Ausführungsform in der Draufsicht,
- Fig. 15a: die in Figur 14a dargestellte Ausführungsform im Querschnitt in der Offenstellung, und
- Fig. 15b: die in Figur 15a dargestellte Ausführungsform in der Draufsicht.

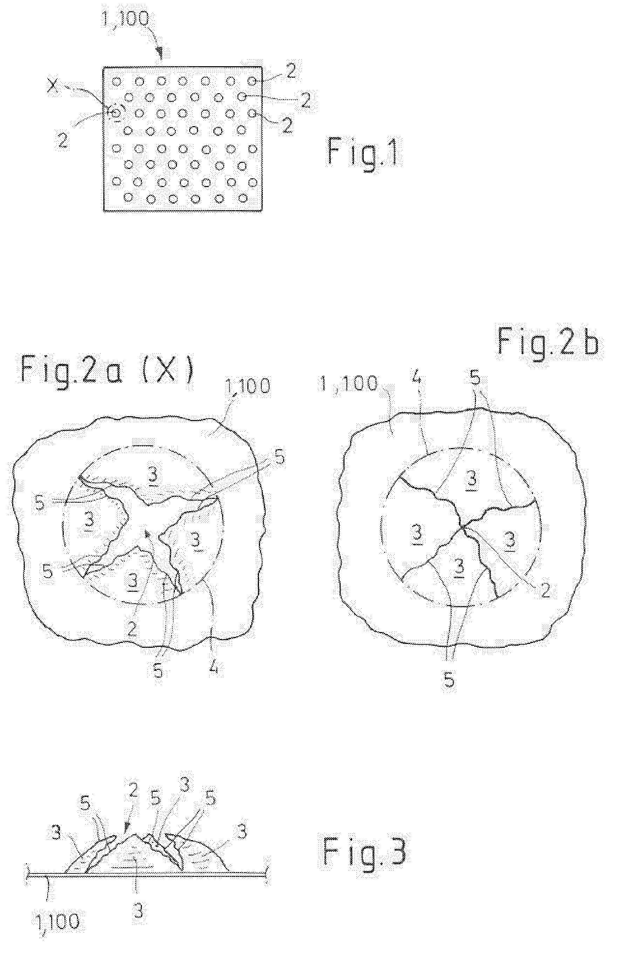

Die Figuren 1 bis 3 zeigen schematisch eine erste Ausführungsform eines Ventilschließkörpers 1 bzw. eines Ventils 100, wobei Figur 1 diese erste Ausführungsform in der Draufsicht darstellt. Der Ventilverschlußkörper 1 ist rechteckig und verfügt über eine Vielzahl von symmetrisch in Reihen angeordneten Poren 2, weshalb er zusätzlich die Funktion eines Filters übernehmen kann.

Figur 2a zeigt die in Figur 1 kenntlich gemachte Einzelheit X in einer Vergrößerung und in der Draufsicht, wobei die Pore 2 geöffnet ist d.h. das Ventil sich in der Offenstellung befindet. Die Pore 2 ist im geöffneten Zustand von ihrer Grundform her sternförmig ausgebildet und wird außen von einem Grundkreis 4 umschlossen. Die Pore 2 wird seitlich von - im vorliegenden Beispiel - vier seitlichen, zungenförmig ausgebildeten Abschnitten 3 begrenzt. Jeder seitliche Abschnitt 3 wird wiederum von zwei ungleichförmigen Seitenrändern 5 begrenzt.

Wie Figur 3, welche die in Figur 2a dargestellte und geöffnete Pore 2 in der Seitenansicht zeigt, entnommen werden kann, stehen die die Pore 2 seitlich begrenzenden Abschnitte 3 im geöffneten Zustand vom Ventilschließkörper 1 hervor. Im geöffneten Zustand hat der Ventilverschlußkörper 1 daher eine Topographie, die der einer Käsereibe ähnelt. Dabei stehen die Abschnitte 3, die die Pore 2 seitlich begrenzen, in Form von blattförmigen Zungen 3 nach oben ab.

Vorteilhaft an dieser Ausführungsform ist, daß der Ventilverschlußkörper 1 bei vollständig geschlossenen Poren 2 über eine hervorragende Dichtigkeit verfügt, wie Figur 2b, welche die Pore 2 im geschlossenen Zustand zeigt, entnommen werden kann.

Der Grund für die gute Dichtigkeit ist, daß die unsymmetrisch geformten Zungen 3 sich im geschlossenen Zustand der Pore 2 nahtlos zu einem in sich kompakten, geschlossenen Blatt zusammenfügen, wobei die ungleichförmigen Ränder 5 der einzelnen Zungen 3 ineinander greifen, was zu einer hohen Stabilität und Dichtheit im geschlossenen Zustand führt.

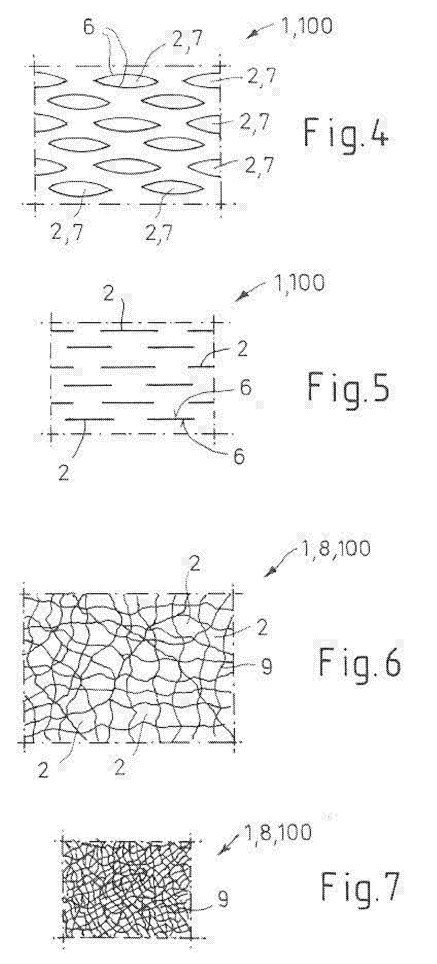

Figur 4 zeigt schematisch eine zweite Ausführungsform eines Ventilverschlußkörpers 1 bzw. eines Ventils 100 in der Draufsicht in der Offenstellung d.h. mit geöffneten Poren 2. Der Ventilverschlußkörper 1 ist netzartig ausgebildet, wobei die Poren 2 maschenförmig sind. Diese Ausführungsform ermöglicht die Ausbildung einer gleichmäßigen Struktur und des weiteren die Generierung von Maschen 7 bzw. Poren 2 einer bestimmten einheitlichen Größe. Dabei werden die Poren 2 bei der Herstellung des Ventilverschlußkörpers 1 gezielt in ein ebenes, aus einem Formgedächtniswerkstoff geformtes Plättchen eingebracht.

Bei der in Figur 4 dargestellten Ausführungsform sind die Poren 2 im geöffneten Zustand rhombusförmig ausgebildet. Vorteilhaft ist an dieser Ausführungsform, daß der Ventilverschlußkörper 1 in seiner geschlossenen Konfiguration d.h. bei vollständig geschlossenen Poren 2 über eine überaus zufriedenstellende Dichtigkeit verfügt, wie Figur 5 entnommen werden kann, welche die in Figur 4 dargestellte Ausführungsform mit geschlossenen Poren 2 zeigt.

Begründet ist dies dadurch, daß rhombusförmig ausgebildete Poren 2 sich leicht und in zufriedenstellender Weise verschließen lassen, beispielsweise durch eine geradlinige Transformation, vorliegend einer Kompression des Ventilverschlußkörpers 1 quer zu der Porenlängsrichtung. Die die Pore 2 im geöffneten Zustand begrenzenden Seitenränder 6 liegen im geschlossenen Zustand bündig und dicht aneinander.

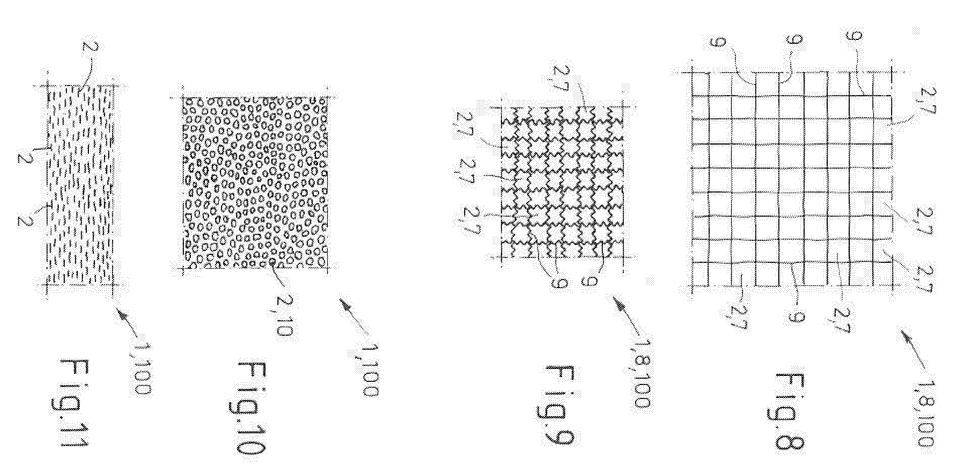

Figur 6 zeigt schematisch eine dritte Ausführungsform eines Ventilverschlußkörpers 1 bzw. eines Ventils 100 in der Draufsicht in der Offenstellung d.h. mit geöffneten Poren 2. Bei dieser Ausführungsform ist der Ventilverschlußkörper 1 als Gewebe 8 ausgeführt, welches aus sich kreuzenden Gewebefasern 9 aufgebaut ist, wobei die Porengröße und damit die Durchlässigkeit des Ventilverschlußkörpers 1 durch die äußere Gestalt der Gewebefasern 9, insbesondere durch die Geradlinigkeit der Gewebefasern 9 steuerbar ist d.h. beeinflußt werden kann. Die Fasern 9 können dabei wahllos und ohne einer bestimmten Ordnung zu folgen miteinander verwebt sein - siehe Figur 6 und 7 - oder aber gezielt nach einem bestimmten Muster angeordnet werden, wie noch im Zusammenhang mit den Figuren 8 und 9 zu sehen sein wird.

Die mindestens zwei Konfigurationen - siehe Figur 6 und Figur 7 - des Gewebes 8 bzw. des Ventilverschlußkörpers 1 unterscheiden sich dadurch, daß in der einen Konfiguration die Gewebefasern 9 eine eher längliche Gestalt aufweisen - siehe Figur 6 - und dadurch zwischen den Gewebefasern 9 Poren 2 ausgebildet werden, die einen genügend großen Strömungsquerschnitt für das Fluid freigeben. In ihrer anderen Konfiguration - siehe Figur 7 - weisen die Gewebefasern 9 nicht mehr ihre eher längliche Gestalt auf, sondern sind mehr oder weniger verdreht.

In dem in Figur 7 dargestellten Grenzfall sind die Fasern 9 derart versponnen bzw. verdreht, daß sie einen geschlossenen, undurchlässigen Filz bilden, wodurch die Schließstellung des Ventils realisiert wird.

Figur 8 zeigt schematisch eine vierte Ausführungsform eines Ventilverschlußkörpers 1 bzw. eines Ventils 100 in der Draufsicht in der Offenstellung d.h. mit weit geöffneten Poren 2 bzw. Maschen 7. Diese Ausführungsform ist der in den Figuren 6 und 7 dargestellten Ausführungsform ähnlich. Bei dieser Ausführungsform ist der Ventilverschlußkörper 1 auch als Gewebe 8 ausgebildet d. h. aus sich kreuzenden Gewebefasern 9 aufgebaut. Die Porengröße und damit die Durchlässigkeit des Ventilverschlußkörpers 1 wird wiederum durch die äußere Gestalt der Fasern 9 d. h. durch die mehr oder weniger vorhandene bzw. fehlende Geradlinigkeit der Gewebefasern 9 gesteuert.

Die Fasern 9 sind dabei aber nicht wahllos, wie bei der in den Figuren 6 und 7 dargestellten Ausführungsform, angeordnet. Die Fasern 9 folgen nämlich einer bestimmten Ordnung und sind nach einem bestimmten Muster angeordnet, nämlich in Form eines Netzes.

Bei der in Figur 8 dargestellten Konfiguration des Gewebes 8 sind die Fasern 9 nahezu geradlinig und die Poren 2 bzw. Maschen 7 weit geöffnet. Hingegen sind bei der in Figur 9 dargestellten Konfiguration die Fasern 9 wellenförmig verformt und die Poren 2 bzw. Maschen 7 folglich weniger weit geöffnet. Sowohl bei der in Figur 8 als auch bei der in Figur 9 dargestellten Momentaufnahme ist das Ventil 100 geöffnet d. h. es befindet sich in der Offenstellung. Es handelt sich um zwei Momentaufnahmen während des Schließvorganges des Ventils 100 d. h. bei geöffnetem Ventil 100.

Figur 10 zeigt in schematischer Darstellung eine fünfte Ausführungsform eines Ventilverschlußkörpers 1 bzw. eines Ventils 100 in der Draufsicht in der Offenstellung d. h. mit geöffneten Poren 2. Figur 11 zeigt diese Ausführungsform mit geschlossenen Poren 2.

Bei der dargestellten Ausführungsform ist der Ventilverschlußkörper 1 schaumförmig ausgebildet. Wenn die Schaumblasen 10 geschlossen sind - siehe Figur 11 - liegt das Ventil 100 in seiner geschlossenen Konfiguration vor.

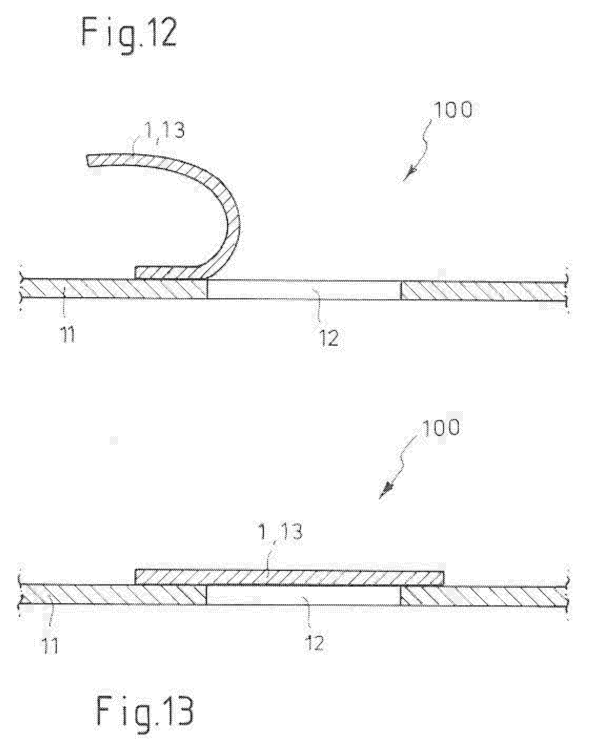

Figur 12 zeigt schematisch eine sechste Ausführungsform eines Ventils 100 im Querschnitt in der Offenstellung. Bei dieser Ausführungsform ist der Ventilverschlußkörper 1 als Lasche ausgebildet und an einer Ventilkörperaufnahme 11 angeordnet, in welcher eine Ventilöffnung 12 vorgesehen ist. Im geöffneten Zustand d. h. in der Offenstellung des Ventils 100 ist die Lasche 13 seitlich weggeklappt und gibt die Ventilöffnung 12 frei.

In der Schließstellung, welche in Figur 13 dargestellt ist, ist die Lasche 13 flächig ausgebildet und verdeckt die Ventilöffnung 12, wodurch das Ventil 100 in seine Schließstellung transformiert wird.

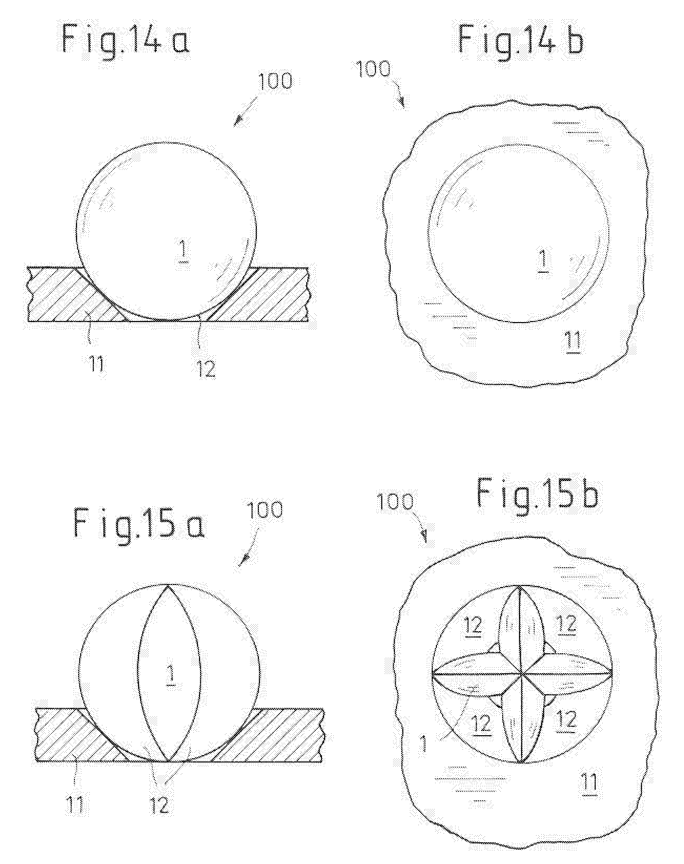

Figur 14a zeigt schematisch eine siebte Ausführungsform eines Ventils 100 im Querschnitt in der Schließstellung. Figur 14b zeigt die in Figur 14a dargestellte Ausführungsform in der Draufsicht.

Bei dieser Ausführungsform ist der Ventilverschlußkörper 1 in der Schließstellung des Ventils 100 als Kugel ausgebildet, wodurch die in der Ventilkörperaufnahme 11 angeordnete Ventilöffnung 12 verschlossen wird. Dabei wird in der Schließstellung der kugelförmige Ventilverschlußkörper 1 von der Ventilöffnung 12 kleineren Durchmessers aufgenommen.

Hingegen ist der Ventilverschlußkörper 1 in der anderen Konfiguration, nämlich der Offenstellung des Ventils 100, karamboleförmig ausgebildet, wie den Figuren 15a und 15b zu entnehmen ist. Dabei werden vier Ventilöffnungen 12 freigegeben, ohne daß der Ventilverschlußkörper 1 an sich der Ventilöffnung 12 entnommen werden müßte.

Günstig an dieser Ausführungsform ist, daß, unter Berücksichtigung der Tatsache, daß eine Vielzahl von herkömmlichen Ventilen nach dem Stand der Technik mit einem Ventilverschlußkörper arbeiten, der eine ballige Form, insbesondere eine Kugelform, aufweist, diese bereits im Einsatz befindlichen Ventile mit einem erfindungsgemäßen Ventilverschlußkörper 1 ausgestattet bzw. nachgerüstet werden können, um auf diese Weise eine erfindungsgemäßes Ventil 100 zu erhalten.

### Bezugszeichen

- 1: Ventilverschlußkörper
- 2: Pore
- 3: seitlicher Abschnitt, Zunge
- 4: der die Pore umschließende Grundkreis
- 5: Rand eines seitlichen Abschnittes
- 6: Seitenrand einer Pore
- 7: Masche
- 8: Gewebe
- 9: Faser
- 10: Schaumblasen
- 11: Ventilkörperaufnahme
- 12: Ventilöffnung
- 13: Lasche

- 100: Ventil

- H₁ bis Hₙ: Übergangs-Magnetfeldstärke
- P₁ bis Pₙ: Übergangsdruck
- T': Übergangstemperatur
- T": Übergangstemperatur
- T₁ bis Tₙ: Übergangstemperatur

## Patentansprüche

1. Ventil (100) mit mindestens einem Ventilverschlußkörper (1), mit welchem das Ventil (100) zwischen einer Schließstellung und einer Offenstellung schaltbar ist,
**dadurch gekennzeichnet, daß**
der mindestens eine Ventilverschlußkörper (1) mindestens einen Formgedächtniswerkstoff aufweist, so daß der Ventilverschlußkörper (1) mindestens von einer ersten Konfiguration in eine zweite Konfiguration transformierbar ist, wobei eine der beiden Konfigurationen die Schließstellung des Ventils (100) und die andere Konfiguration die Offenstellung des Ventils (100) darstellt, in der das Ventil (100) für Fluide durchlässig ist.

2. Ventil (100) nach Anspruch 1,
**dadurch gekennzeichnet, daß**
der mindestens eine Ventilverschlußkörper (1) eine Matrix aufweist, in welche der Formgedächtniswerkstoff, vorzugsweise in Form von Fasern (9), eingebettet ist.

3. Ventil (100) nach Anspruch 2,
**dadurch gekennzeichnet, daß**
die Matrix vorwiegend aus Aluminium oder Plastik gefertigt ist.

4. Ventil (100) nach Anspruch 1,
**dadurch gekennzeichnet, daß**
der mindestens eine Ventilverschlußkörper (1) ein Trägersubstrat aufweist, auf das der Formgedächtniswerkstoff aufgetragen, vorzugsweise aufgesputtert, ist.

5. Ventil (100) nach einem der vorherigen Ansprüche,
**dadurch gekennzeichnet, daß**
der mindestens eine Formgedächtniswerkstoff ein Formgedächtniswerkstoff aus der folgenden Gruppe ist: NiTi (Nitinol), Fe-Pt, Cu-Al-Ni, Fe-Pd, Fe-Ni, Cu-Zn-Al, CuAlMn, Keramik, insbesondere Ce-TZP-Keramik.

6. Ventil (100) nach einem der vorherigen Ansprüche,
**dadurch gekennzeichnet, daß**
der mindestens eine Formgedächtniswerkstoff mittels Temperatur steuerbar ist und mindestens eine Übergangstemperatur T1 als Transformationspunkt aufweist, bei der der mindestens eine Ventilverschlußkörper (1) von der ersten Konfiguration in die zweite Konfiguration übergeht.

7. Ventil (100) nach einem der Ansprüche 1 bis 5,
**dadurch gekennzeichnet, daß**
der mindestens eine Formgedächtniswerkstoff mittels Magnetfeld steuerbar ist und mindestens eine Übergangs-Magnetfeldstärke H1 als Transformationspunkt aufweist, bei der der mindestens eine Ventilverschlußkörper (1) von der ersten Konfiguration in die zweite Konfiguration übergeht.

8. Ventil (100) nach einem der Ansprüche 1 bis 5,
**dadurch gekennzeichnet, daß**
der mindestens eine Formgedächtniswerkstoff mittels hydrostatischem Druck steuerbar ist und mindestens einen Übergangsdruck P1 als Transformationspunkt aufweist, bei der der mindestens eine Ventilverschlußkörper (1) von der ersten Konfiguration in die zweite Konfiguration übergeht.

9. Ventil (100) nach einem der vorherigen Ansprüche,
**dadurch gekennzeichnet, daß**
der mindestens eine Formgedächtniswerkstoff n Transformationspunkte - d. h. n Übergangstemperaturen T1 bis Tn, n Übergangs-Magnetfeldstärken H1 bis Hn oder n Übergangsdrücke P1 bis Pn - aufweist, bei denen der mindestens eine Ventilverschlußkörper (1) von einer Konfiguration in eine andere Konfiguration übergeht, wobei der mindestens eine Ventilverschlußkörper (1) (n+1) Konfigurationen aufweist.

10. Ventil (100) nach einem der vorherigen Ansprüche,
**dadurch gekennzeichnet, daß**
der mindestens eine Ventilverschlußkörper (1) in der einen Konfiguration - der Schließstellung des Ventils - eine ballige Form, vorzugsweise eine Kugelform, aufweist, wohingegen in der anderen Konfiguration - der Offenstellung des Ventils - der Ventilverschlußkörper (1) karamboleförmig ausgebildet ist.

11. Ventil (100) nach einem der Ansprüche 1 bis 10,
**dadurch gekennzeichnet, daß**
der mindestens eine Ventilverschlußkörper (1) mit Poren (2) ausgestattet ist, wobei in der einen Konfiguration - der Schließstellung des Ventils - die Poren geschlossen sind und in der anderen Konfiguration - der Offenstellung des Ventils - die Poren geöffnet sind.

12. Ventil (100) nach Anspruch 11,
**dadurch gekennzeichnet, daß**
der mindestens eine Ventilverschlußkörper (1) als Gewebe (8) ausgeführt ist, welches aus sich kreuzenden Gewebefasern (9) aufgebaut ist, wobei die Porengröße und damit die Durchlässigkeit des Ventilverschlußkörper (1) durch die äußere Gestalt der Gewebefasern (9), insbesondere durch die Geradlinigkeit der Gewebefasern (9) steuerbar ist.

13. Ventil (100) nach Anspruch 11 oder 12,
**dadurch gekennzeichnet, daß**
der mindestens eine Ventilverschlußkörper (1) netzartig ausgebildet ist und über im geöffneten Zustand maschenförmig ausgebildete Poren (2,8) verfügt.

14. Ventil (100) nach einem der Ansprüche 11 bis 13,
**dadurch gekennzeichnet, daß**
die Poren (1,8) im geöffneten Zustand rhombusförmig oder parallelogrammförmig ausgebildet sind.

15. Ventil (100) nach Anspruch 11,
**dadurch gekennzeichnet, daß**
die Poren (2) im geöffneten Zustand sternförmig ausgebildet sind.

16. Ventil (100) nach Anspruch 15,
**dadurch gekennzeichnet, daß**
die die Poren (2) seitlich begrenzenden Abschnitte (3) im geöffneten Zustand vom Ventilverschlußkörper (1) hervorstehen.

17. Verwendung eines Ventils (100) nach einem der vorherigen Ansprüche,
**dadurch gekennzeichnet, daß**
das Ventil (100) im Kraftstoffsystem einer Brennkraftmaschine verwendet wird.

18. Verwendung eines Ventils (100) nach einem der Ansprüche 1 bis 16,
**dadurch gekennzeichnet, daß**
das Ventil (100) im Ölkreislauf einer Brennkraftmaschine verwendet wird.

19. Verwendung eines Ventils (100) nach einem der Ansprüche 1 bis 16,
**dadurch gekennzeichnet, daß**
das Ventil (100) im Kühlwasserkreislauf einer Brennkraftmaschine verwendet wird.

20. Verwendung eines Ventils (100) nach einem der Ansprüche 1 bis 16,
**dadurch gekennzeichnet, daß**
das Ventil (100) in der Luftzufuhr einer Brennkraftmaschine verwendet wird.

21. Verwendung nach Anspruch 20,
**dadurch gekennzeichnet, daß**
das Ventil (100) in der Bypaßleitung eines Ladeluftkühlers verwendet wird.

22. Verwendung eines Ventils (100) nach einem der Ansprüche 1 bis 16,
**dadurch gekennzeichnet, daß**
das Ventil (100) in der Frischluftzufuhr eines Fahrzeuges verwendet wird.

23. Verwendung eines Ventils (100) nach einem der Ansprüche 1 bis 16,
**dadurch gekennzeichnet, daß**
das Ventil (100) in der Klimaanlage eines Fahrzeuges verwendet wird.
